# EUROPEAN PATENT APPLICATION

(11) **EP 4 023 558 A1**
(43) Date of publication of application: **06.07.2022**
(21) Application number: 21217740.6
(22) Date of filing: 24.12.2021
(51) Int. Cl.: B64D 27/24, H02K 16/02

(54) **AERONAUTICAL PROPULSION DEVICE**

(30) Priority: 30.12.2020 IT 202000032822
(71) Applicant: Phase Motion Control S.p.A., 16154 Genova (IT)
(72) Inventor: Venturini, Marco, 16154 Genova (GE) (IT)
(74) Representative: Bottino, Giovanni

(57) **Abstract**

Aero propulsion device comprising an electric motor and at least one propeller provided with a plurality of blades, which propeller is driven in rotation by said electric motor. The device is in a rim drive configuration such that said electric motor comprises a first rotor (11) of annular shape, a plurality of said blades being connected to said first rotor and arranged internally to form a first said propeller (10).

## Description

The present invention relates to an aircraft propulsion device comprising an electric motor and at least one propeller provided with a plurality of blades, which propeller is driven in rotation by said electric motor.

Although the benefits of air transport are evident in terms of mobility and connectivity, the aviation sector will be a growing challenge for the environment in the years to come. In fact, aviation currently accounts for well over 3% of global greenhouse gas emissions and long-term forecasts indicate that air traffic will continue to increase.

The transport sector will therefore have to face considerable challenges in order to achieve a zero-carbon status. Accordingly, there is considerable interest in the development of aircraft that can use electricity, not combustion, for propulsion. The construction of these aircraft, however, requires the solution of important technological problems.

In the first instance, the electric motors currently used in aeronautics, which are the most optimised in terms of power density, still have limited performance compared to jet engines, and tend to have unsustainable weights for the needs of the aeronautical industry. Typical power densities of electric motors for aeronautical propulsion, all experimental, are around 7 - 7.5 KW/Kg, and this means that meeting needs in terms of power delivered by the current combustion engines, which reach an order of magnitude of MegaWatt, would require very heavy electric motors.

Secondly, although electric motors can boast a greater efficiency in the conversion of accumulated energy, the energy density of fossil fuels, and in particular of oil products such as kerosene, is very difficult to match. The batteries currently available are of high weight and this, in combination with the above in relation to engines, creates a weight problem that is difficult to overcome in order to make the technological transition towards electric mobility in the field of air transport.

To address this issue with an incremental approach, hybrid electric/turbine propulsion aircraft have been proposed, in which the jet engine with its fuel is maintained in a reduced size and optimised for cruise flight, but is flanked by an electric propulsion system capable of delivering the power necessary for take-off, which is more than double that necessary for cruise flight, but is required only for a few minutes.

In this condition, the request for storage of electrical energy by means of batteries is mitigated, but the need for sufficiently lightweight systems suitable for delivering high power, i.e. a high power density propellant, remains unmet by devices known to the state of the art.

In aircraft propulsion devices known to the state of the art, the electric motor rotates the hub of the propeller or of a fan (intubated propeller). The maximum power delivered by the motor has inherent limits known to the designer, which are imposed by the field strength of the magnets used and by the electrical conductivity of the conductive material that constitutes the windings, and therefore by the current density that can be conveyed there. The rotation speed of the propeller also places construction limits on the motor, therefore faster electric motors must be connected to the propellers by means of reduction gears, with an increase of construction complexity and weight.

US 2011/074158 A1 discloses a turbomachine for naval use comprising at least two rotors mounted so as to be rotatable in opposite directions to each other around a rotation axis and on which blades are arranged. A machine shaft is rotatably mounted and connected by a drive mechanism to the two rotors to convert a rotational movement of the machine shaft into rotational movements of the rotors in opposite directions to each other. The turbomachine has a casing forming a conduit for fluid flow, wherein the rotors are arranged in series in the conduit in the fluid flow direction, the machine shaft and the rotors have an annular structure and are rotatably mounted in the housing, and wherein the annular rotors have respectively an inner side of the ring and an outer side of the ring, wherein the blades are arranged on the inner side of the ring. An electric motor drives in rotation the drive shaft and said drive mechanism of the two counter-rotating rotors comprises various gear configurations.

The turbomachine is also indicated as suitable for aeronautical use, but only as an electric power generator, therefore of small size. The presence of the aforementioned gears, in fact, does not make possible a sizing suitable for the use of the turbomachine as a propeller without consequently increasing the overall weight, i.e. going in the opposite direction to what is required by flight requirements.

This problem is addressed by document EP 3 670 349 A1, which describes an electric propeller of a rim drive powered aircraft, indicated solely as an alternative to the endothermic turbofan, in which the blade support rotor is provided with magnets, so as to form part of the electric drive motor of the propeller itself. This makes it possible to avoid the presence of gears and other accessory systems that would increase the overall weight of the engine. Although the improvement in terms of weight is significant, the presence of a ferromagnetic core typical of electric motors still makes this type of propeller not very usable in the aeronautical field.

The present invention aims to fill this gap with an aircraft propulsion device as described at the beginning, which is also in a rim drive or rim driven configuration, such that said electric motor comprises a first rotor of annular shape, being a plurality of said blades connected to said first rotor and arranged internally to form a first said propeller, and a stator, and being the core of the first rotor and/or the core of the stator made of non-ferromagnetic material, so that said motor is free of magnetic attraction between the first rotor and the stator.

In a preferred embodiment, the core of the first rotor and/or the core of the stator are made of material composed of carbon fibre.

However, it is possible to provide for the core of the first rotor and/or the core of the stator of further non-ferromagnetic material, for example composite material comprising Kevlar and/or silicon whisker, or fibre ceramic material.

In the conventional construction of an electric motor, the stator is typically formed from a plurality of iron or steel sheets cut into the shape of the stator. These sheets are then stacked one on top of the other to form a single laminated core in the direction of magnetisation, in which the sheets are isolated and glued to each other. The sheets are toothed along the internal profile to create slots that accommodate single or multiple coils, made with suitable insulated conductors. The rotor typically includes a circular iron or steel crown such as to define an outer surface with substantially cylindrical development, on which outer surface the permanent magnets are arranged.

The high amount of iron in this type of construction not only significantly affects the overall weight, but also generates magnetic attraction of the structure towards the magnets. For this reason, the motor structure must be very rigid to avoid contact in the air gap between the rotor magnets and the stator. The circular structure helps to maintain the balance of these magnetic attraction forces, but the structure cannot be undersized, otherwise mechanical deformations would be induced such as to cause the aforementioned contacts. For these reasons the weight of the engine cannot be reduced beyond certain limits according to the conventional construction.

The present invention seeks to reduce drastically the weight of the electric motor by replacing the iron or steel structural elements of the rotor and stator with lightweight material cores that do not cause a magnetic attraction between the rotor and stator.

In an exemplary embodiment, said stator is movable and forms a second annular shaped rotor, a further plurality of said blades being connected to said second rotor and disposed internally thereto to form a second said propeller, the first and second propellers being counter-rotating.

The rim drive configuration involves the integration of an electric motor within a ducted propeller, resulting in a compact and electrically driven propulsion package. The propeller is housed in a duct in a rotating manner with respect to the conduit around an axis of rotation and is driven by an electric motor. The propeller includes a plurality of blades and an annular or cylindrical member surrounding the blades and surrounded by the conduit. The electric motor rotates the annular member with respect to the duct, thereby rotatably driving the propeller.

Thrusters in rim drive configuration are known to the state of the art and have been used for about a decade in naval industry thrusters.

This configuration eliminates the need for conventional mechanical transmissions and does not rotate the propeller hub with respect to typically used electric motors. On the other hand, the strong magnetic attraction normally present between the stator and rotor requires a mechanically robust and therefore heavy construction, which has limited its application to the naval field.

Since the motor is arranged annularly around the propeller blades, the diameter of the motor is significantly larger than the diameter of a motor integrated into the hub. Since the electric motor applies its own tangential thrust on a much higher diameter than that available in the hub, this translates into an increase in the torque delivered by the motor with the same weight.

The power delivered by the motor is dependent on the torque but also on the speed of rotation. However, the rotational speed cannot be increased at will if the presence of motion transmission and motor reduction mechanisms is to be avoided.

Providing the electric motor in a configuration with two counter-rotating rotors, each connected to a respective propeller, instead of in the classic configuration with rotor and stator, allows for the substantial doubling of the power delivered at the same torque and speed of the single propeller.

According to an exemplary embodiment, said motor has a diameter in the range of 2 m to 3.5 m.

According to an improvement, the first rotor is provided with a plurality of permanent magnets and the second rotor is provided with a plurality of windings.

In an exemplary embodiment, the windings are made of a transposed multipolar Litz wire conductor to minimise losses in the high frequency conductors.

The present invention therefore aims to reduce drastically the weight of the electric motor by replacing the iron or steel structural elements of the rotor and stator with two counter-rotating rotors of carbon fibre composite material, which carry the permanent magnets and the windings respectively.

This means that the motor is not subject to a magnetic attraction exerted mutually between the two rotating parts and can therefore be very light. Due to the absence of iron and therefore of the aforementioned magnetic attraction, when the motor is driven and delivers a thrust the rotor tends to centre itself, because any local approaches would be compensated in repulsion by the rotational interaction between magnets and coils. In operating conditions, the motor is therefore self-centring.

In addition to having structural functions, the iron used in conventional motors helps to convey the magnetic circuit. The magnetic circuit created by the interaction of coils and magnets develops almost entirely in iron, with the exception of the air in the air gap. Since the iron has high magnetic permeability, the only resistance that the circuit encounters is substantially the air of the air gap.

For this reason, the absence of iron is at the expense of the power supplied by the engine. However, in combination with the above-mentioned features of rim drive configuration and counter-rotating propellers, the overall power increase can be slightly reduced to achieve a significant weight reduction, resulting in an improvement of the power-to-weight ratio.

According to an exemplary embodiment, the first rotor surrounds the second rotor in an overlapping intermediate zone, in which intermediate zone said permanent magnets and said windings are provided, said permanent magnets and said windings are respectively provided, being facing each other in the radial direction.

In an embodiment, at least the second propeller is provided with a central hub, being provided with an electrical supply circuit of said windings, which circuit comprises electrical conductors provided in one or more blades of said second propeller and sliding connections in said hub.

This allows the electrical powering of the second rotor that carries the windings, and therefore the entire electric motor, although there is no stator.

In one embodiment, said magnets are arranged in a Halbach configuration such that the magnets are divided into groups of three, each group consisting of a first magnet oriented with its preferred magnetic field in the direction of the windings of the second rotor, a second magnet adjacent to the first magnet and oriented with its preferred magnetic field in the direction of the first magnet and a third magnet adjacent to the second magnet and oriented with its preferred magnetic field in the direction opposite to the windings of the second rotor.

This makes it possible to obtain triplets of permanent magnets on the rotor, oriented so as to accompany the magnetic field flow created by the interaction of the magnets with the windings. This feature is particularly advantageous in combination with the carbon fibre composite rotors described above. In this configuration, in fact, the magnetic circuit cannot be conveyed by the iron as is the case with conventional motors, but instead follows a path through a material with low magnetic permeability, incurring high losses. The arrangement of the magnets in Halbach configuration makes it possible to mitigate this problem at the level of the rotor and at the same time reduce the dispersed magnetic fluxes.

In one exemplary embodiment, the device constitutes the fan of a turbofan.

This allows the above-described propeller to be used in combination with an internal combustion jet engine for the construction of a hybrid propulsion aeroplane.

In an alternative exemplary embodiment, the device that is the subject matter of the present invention is used for fully electric propulsion of an aircraft.

These and other features and advantages of the present invention will become clearer from the following description of some non-limiting exemplary embodiments illustrated in the attached drawings in which:
Fig. 1 illustrates an exploded view of an exemplary embodiment of the propulsion device;
Fig. 2 illustrates a detailed exploded view of the electric motor;
Fig. 3 illustrates a detailed view of the electric motor in assembled condition;
Fig. 4 illustrates the propulsion device inserted into a turbofan;
Fig. 5 illustrates the configuration of the magnets;
Fig. 6 illustrates the variation of field density in a B-H diagram in different configurations.

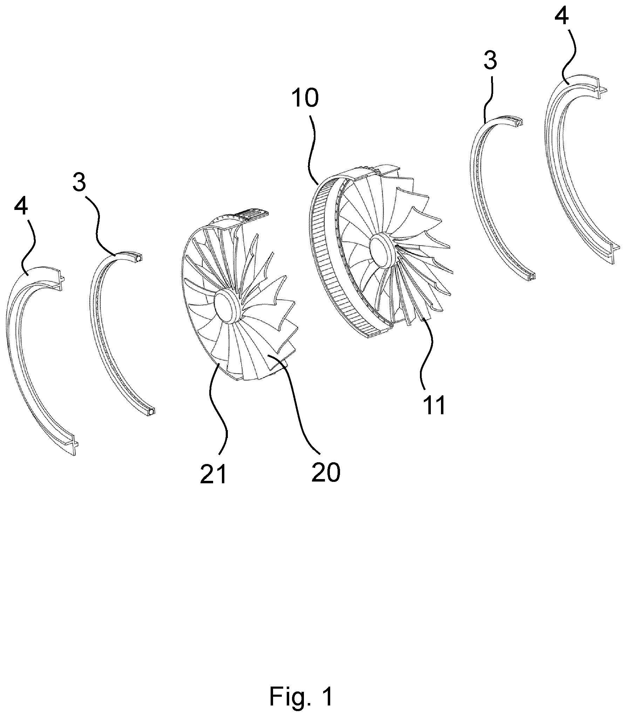

Figure 1 shows the aeronautical propulsion device in rim drive configuration. The propulsion device includes a permanent magnet electric motor. Said electric motor comprises a first annular-shaped rotor 11 connected to a plurality of blades arranged internally thereto to form a first propeller 10 and a second annular-shaped rotor 21 connected to a further plurality of blades arranged internally thereto to form a second propeller 20. The first and second rotors 11 and 21 therefore constitute circles arranged side by side and coaxial on a common axis of rotation, on which the blades of the first and second propellers 10 and 20 respectively are fixed, which blades extend in the direction of the axis of rotation to form a pair of intubated propellers.

Instead of being made up of a rotor and a stator, therefore, the motor comprises two rotors 11 and 21 bound to each other and counter-rotating, such that the first and second propellers 10 and 20 are counter-rotating.

However, it is possible to provide a configuration in which one of the two rotors is locked and only one propeller is driven. In this embodiment, the motor can be traced back to the classic rotor-stator configuration.

The pack consisting of the two rotors 11 and 21 and the respective propellers 10 and 20 is rotatably coupled with an external casing 4 by means of bearings 3.

The rotors 11 and 21 have a diameter of between 2 m and 3.5 m.

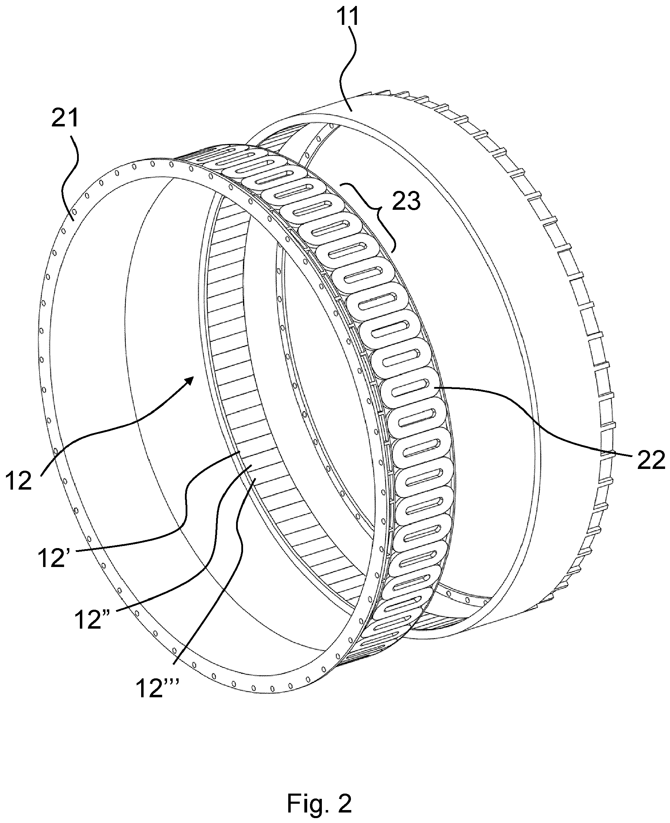

As can be seen in the detail view of the electric motor in Figure 2, the first rotor 11 is provided with a plurality of permanent magnets 12 and the second rotor 21 is provided with a plurality of windings 22. The windings 22 are grouped into phase groups 23 arranged alternately in sequence along the entire second rotor 21 to create a polyphase motor.

The first rotor 11 surrounds the second rotor 21 in an intermediate zone of overlap that extends for a predetermined length in the axial direction, in which intermediate zone the said permanent magnets 12 and the said windings 22, facing each other in the radial direction, are respectively provided.

The propellers 10 and 20 are provided with a central hub and there is a power supply circuit for the windings 22 present on the second rotor. Said circuit comprises electrical conductors provided in one or more blades of said second propeller 20 and sliding connections in said hub. The electrical circuit is connected to an electrical power source, preferably a battery system and a DC-AC converter suitable for driving the motor.

The first rotor 11 and the second rotor 22 consist of annular elements of carbon fibre composite material, on which the magnets 12 and the windings 23 are respectively fixed.

It is possible to use other composite materials, known in the art, of sufficient lightness and mechanical strength.

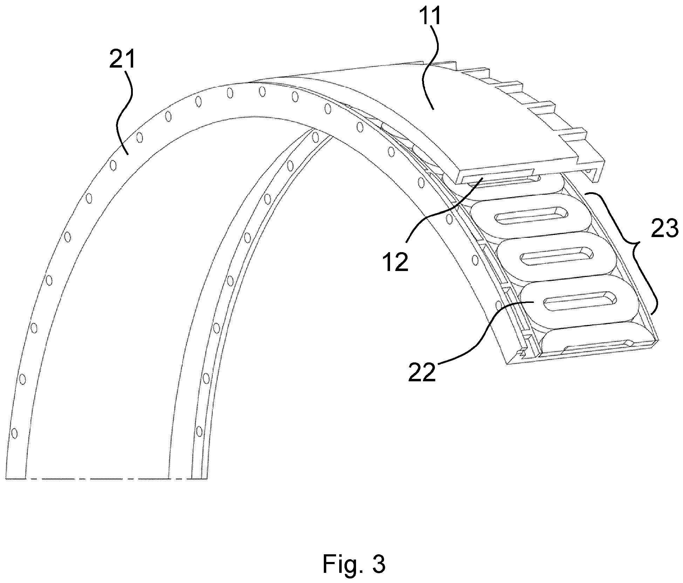

Figure 3 illustrates the propulsion device inserted in a turbofan, wherein it acts as a fan and works in combination with a combustion jet engine 5. The jet engine 5 is provided with an air inlet 50, a compressor 51, a combustion chamber 52, a compressor drive turbine 53, and an exhaust nozzle 54 that provides thrust. The amount of gas exiting the exhaust nozzle 54 is much higher than that of the inlet air because a thermal expansion takes place in the combustion chamber 52. In the turbofans currently used, the turbine 53 is connected to both the compressor and the fan, and the fan is intubated with a larger diameter than the air inlet 50, so as to create a double outflow. The larger the diameter of the fan compared to the air inlet 50, the higher the bypass ratio. This is a design parameter of the turbofans that indicates the ratio between the secondary or cold mass flow, i.e. the mass flow of air passing through the bypass, and the primary or hot mass flow, i.e. processed by compressor 51, combustion chamber 52 and turbine 53. In transport aircraft turbofans, a high bypass ratio is preferred, so that most of the thrust is generated by the fan rather than by the expansion of the combustion gases in the exhaust nozzle so as to ensure low specific consumption and low noise.

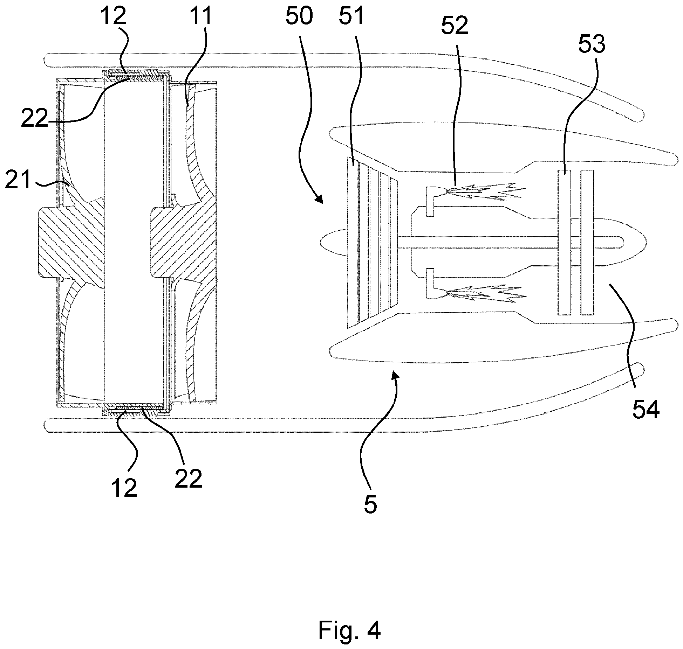

As shown in Figure 4, 1 magnets 12 are arranged on the rotor 10 in a Halbach configuration. According to this arrangement, the magnets 12 are divided into groups of three. Each group comprises a first magnet 12' oriented with its own preferential magnetic field in the direction of the windings 22 of the second rotor 21, a second magnet 12" adjacent to the first magnet 12' and oriented with its own preferential magnetic field in the direction of the first magnet 12' and a third magnet adjacent to the second magnet 12" and oriented with its own preferential magnetic field in the opposite direction to the windings 22 of the second rotor 21.

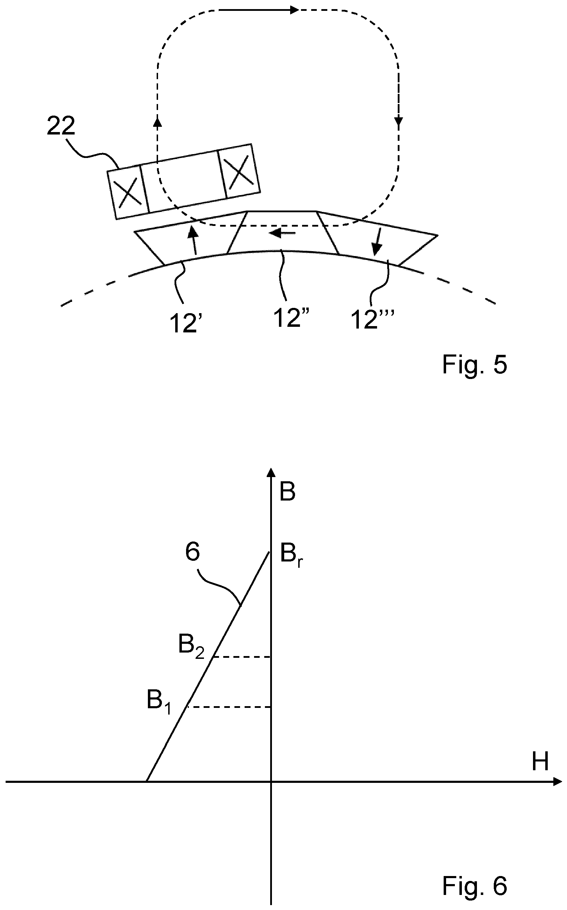

Figure 5 shows the diagram B-H corresponding to the magnetic circuit consisting of the magnets 12 and the windings 22, in which B is the magnetic field density and H is the reluctance of the magnetic path, that is, the resistance that opposes the magnetic path.

A magnet perfectly short-circuited, i.e. with zero reluctance, has a magnetic field density Bᵣ, which is the maximum possible value. Due to the presence of air, the reluctance necessarily increases and the magnetic field descends along line 6. Since the rotors 11 and 21 are made of carbon fibre, due to the absence of iron the reluctance increases again, resulting in a lower magnetic field B₁. Since the delivered torque is proportional to the magnetic field strength, it is evident that in this condition the motor suffers significant losses. The replacement of iron with composite material, however, makes it possible to reduce the weight of the engine by about 75%, and in the aeronautical field this can represent a positive balance in the calculation of costs/benefits related to weight/performance of the engine.

However, the Halbach configuration illustrated in Figure 3 allows the magnetic field to be better conveyed in the magnets 12, i.e. at least in the part relating to the first rotor 11. This significantly improves the overall magnetic field density, allowing it to rise along line 6 and to a value of B₂.

In addition, the Halbach configuration makes it possible to minimise the magnetic flux dispersed on the opposite side with respect to the windings; this flux, which constitutes a rotating field, could generate losses due to eddy currents in any metal parts in the vicinity, such as the nacelle fairing.

Thanks to the combination of these measures, it is possible to realise an aeronautical electric motor with a very high specific power. Calculations indicate that it is possible to build an electric motor with a power density between 20 and 30 KW/Kg, compared to 7 - 7.5 KW/Kg of the currently known motors, and at the same time to create a motor that can be supported by the fan's own blades, as they are not subject to magnetic forces other than torque, and can therefore be mounted on the blades with a certain amount of mechanical clearance, which is essential to compensate for the variation in length of the same for temperature and centrifugal force.

## Claims

1. Aero propulsion device comprising an electric motor and at least one propeller provided with a plurality of blades, which propeller is driven in rotation by said electric motor,
**characterised in that**
it is in a rim drive configuration such that said electric motor comprises a first rotor (11) of annular shape and a stator, said blades being connected to said first rotor and arranged internally thereto to form a first said propeller (10), and the core of the first rotor (11) and/or the core of the stator being made of non-ferromagnetic material, such that said motor is free of magnetic attraction between the first rotor (11) and the stator.

2. Device according to claim 1, wherein the core of the first rotor (11) and/or the core of the stator are made of carbon fibre composite material.

3. Device according to claim 1 or 2, wherein said stator is movable and forms a second rotor (21) of annular shape, being a further plurality of said blades connected to said second rotor (21) and arranged internally thereto to form a second said propeller (20), the first and second propellers (10, 20) being counter-rotating.

4. Device according to one or more of the preceding claims, wherein the first rotor (11) is provided with a plurality of permanent magnets (12) and the second rotor (21) is provided with a plurality of windings (22).

5. A device according to claim 4, wherein the windings (22) are made of a transposed multipolar Litz wire conductor to minimise losses in the high-frequency conductors.

6. Device according to claim 4 or 5, wherein said magnets (12) are arranged in a Halbach configuration such that the magnets (12) are divided into groups of three, each group being a first magnet (12') oriented with its preferred magnetic field in the direction of the windings (22) of the second rotor (21), a second magnet (12") adjacent to the first magnet (12') and oriented with its preferred magnetic field in the direction of the first magnet (12') and a third magnet (12‴) adjacent to the second magnet (12") and oriented with its preferred magnetic field in the direction opposite to the windings (22) of the second rotor (21).

7. Device according to claim 4 or 5, wherein at least the second propeller (20) is provided with a central hub, since a power supply circuit of said windings (22) is also provided, which circuit comprises electrical conductors provided in one or more blades of said second propeller (20) and sliding connections in said hub.

8. Device according to claim 4 or 5, wherein the first rotor (11) surrounds the second rotor (21) in an intermediate overlapping zone, in which intermediate zone are provided respectively said permanent magnets (12) and said windings (22), said permanent magnets (12) and said windings (22) facing each other in the radial direction.

9. Device according to one or more of the preceding claims, wherein said device constitutes the fan of a turbofan.
